(19) **Europäisches Patentamt**

**European Patent Office**

**Office européen des brevets**

(11) **EP 0 891 895 B1**

(12) **EUROPÄISCHE PATENTSCHRIFT**

(45) Veröffentlichungstag und Bekanntmachung des Hinweises auf die Patenterteilung:
**10.11.2004  Patentblatt 2004/46**

(51) Int Cl.⁷: **B60R 16/02**

(21) Anmeldenummer: **98112751.7**

(22) Anmeldetag: **09.07.1998**

(54) **Verfahren zur Einstellung der Drosselklappe und/oder Einspritzmenge einer Brennkraftmaschine eines Kraftfahrzeuges an die Vorgabe des Fahrzeugführers**

Procedure for setting the throttle valve and/or injection quantity of a vehicle engine to the driver's setpoint value

Procédé de réglage du carburateur et/ou du débit d'injection d'un moteur de véhicule par rapport à la consigne du conducteur

(84) Benannte Vertragsstaaten:
**DE FR GB IT**

(30) Priorität: **18.07.1997  DE 19730906**

(43) Veröffentlichungstag der Anmeldung:
**20.01.1999  Patentblatt 1999/03**

(73) Patentinhaber: **DaimlerChrysler AG**
**70567 Stuttgart (DE)**

(72) Erfinder:
• **Gimmler, Helmut**
**71409 Schwaikheim (DE)**

• **Heidinger, Andreas**
**73650 Winterbach (DE)**
• **Kuhn, Klaus-Peter, Dr.**
**73655 Plüderhausen (DE)**

(56) Entgegenhaltungen:
| | |
|---|---|
| **DE-A- 3 504 197** | **DE-A- 4 128 627** |
| **DE-A- 4 401 146** | **DE-A- 4 409 122** |
| **DE-C- 3 844 353** | **US-A- 4 597 049** |
| **US-A- 4 729 356** | **US-A- 4 834 045** |

## Beschreibung

Die vorliegende Erfindung betrifft ein Verfahren zur Einstellung der Drosselklappe und/oder Einspritzmenge einer Brennkraftmaschine eines Kraftfahrzeuges abhängig von der Vorgabe eines Fahrzeugführers nach dem Oberbegriff der Patentansprüche 1 bzw. 5.

Aus der DE 35 04 197 C2 sind gattungsgemäße Verfahren zur Einstellung der Drosselklappe und/oder der Einspritzmenge einer Brennkraftmaschine eines Kraftfahrzeuges abhängig von der Vorgabe eines Fahrzeugführers bekannt, bei dem eine Anpassung der Einstellung an den erkannten Fahrstil des Fahrzeugführers erfolgt. Die Erkennung des Fahrstils erfolgt, indem mittels eines manuell zu betätigten Schalters durch den Fahrzeugführer eine entsprechende Vorwahl getroffen wird. Die Kennlinie der Winkelstellung der Drosselklappe bzw. der Einspritzmenge über der Vorgabe des Fahrzeugführers weist- bei einer als ruhig erkannten Fahrweise einen progressiven Verlauf auf und bei einer als sportlich erkannten Fahrweise einen degressiven Verlauf. Als Vorgabe des Fahrzeugführers wird die Stellung des Fahrpedals verwendet.

Weiterhin ist es aus der DE 44 01 416 A1 bekannt, eine Bewertung des individuellen Fahrstiles des Fahrzeugführers vorzunehmen. Nach der in der DE 44 01 416 A1 beschriebenen Vorgehensweise erfolgt die Bewertung im wesentlichen durch eine Auswertung der gemessenen Beschleunigungen in Längs- und Querrichtung des Fahrzeuges. Aus dem in der DE 44 01 416 A1 beschriebenen Stand der Technik ist es bekannt, zur Bewertung des Fahrstiles des Fahrzeugführers die Art der Betätigung unter anderem des Fahrpedales heranzuziehen. Die Berücksichtigung des individuellen Fahrstiles erfolgt dann, indem entsprechend der Bewertung entsprechend in das Motor-/Getriebemanagement eingegriffen wird.

Weiterhin ist es aus der DE 38 44 353 C2 bekannt, einen Sollwert für die Einstellung einer Drosselklappe in Form eines Lufmassen-Stellantriebs zu bilden, indem zur Stellung eines Fahrpedals ein Ableitungs-Sollwert addiert wird. Der Ableitungs-Sollwert wird durch Differenzieren des Signals der Stellung des Fahrpedals berechnet.

Weiterhin ist es aus der US-PS 4,597,049 bekannt, einen stop-and-go Verkehr von einem fließenden Verkehr zu unterscheiden, indem die Betätigung des Fahrpedals durch den Fahrzeugführer ausgewertet wird. Bei einem erkannten stop-and-go Verkehr weist die Kennlinie der Stellung der Drosselklappe bzw. der Einspritzmenge über der Stellung des Fahrpedals einen progressiveren Verlauf auf, als dies im normalen Fahrbetrieb des Fahrzeugs der Fall ist.

Progressiver Verlauf bedeutet dabei insbesondere, daß für kleine Winkel des Fahrpedales ein flacher Anstieg erfolgt und erst für größere Winkel ein stärkerer Anstieg. Entsprechend bedeutet der degressive Verlauf bei einer als sportlich erkannten Fahrweise insbesondere, daß bei kleinen Winkeln des Fahrpedales zunächst ein steilerer Anstieg erfolgt, der bei größeren Winkeln des Fahrpedales abnimmt.

Dadurch wird bei ruhiger Fahrweise bei einer Ableitung der Vorgabe aus der Stellung des Fahrpedales einem entsprechend größeren Winkelbereich der Stellung des Fahrpedales der Winkelbereich der Stellung der Drosselklappe bzw. die Einspritzmenge zugeordnet, die der Fahrzeugführer üblicherweise einstellt. Dadurch ist eine entsprechend feinfühlige Dosierung bei ruhiger Fahrweise möglich. Weiterhin wird vorteilhaft bei einer als sportlich erkannten Fahrweise kleinen Winkelstellungen des Fahrpedales ein entsprechend großer Winkelbereich der Drosselklappe bzw. der Einspritzmenge zugeordnet. Dadurch ist bei einer als sportlich erkannten Fahrweise ein entsprechend agileres Dosierverhalten bei sportlicher Fahrweise möglich.

Eine Auslegung im Sinne einer entsprechend feinfühligen Dosierung kann bei herkömmlichen Systemen mit einer festen Kennlinie nur eingeschränkt realisiert werden. Wird das System nämlich auf einen Fahrzeugführer mit einer ruhigen Fahrweise eingestellt, verschlechtert sich dadurch die Feinfühligkeit der Dosierung für einen Fahrzeugführer mit einer eher sportlichen Fahrweise. Entsprechend verschlechtert sich die Feinfühligkeit der Dosierung für einen Fahrzeugführer mit einer ruhigen Fahrweise, wenn das System auf einen Fahrzeugführer mit einer sportlichen Fahrweise ausgelegt ist.

Der vorliegenden Erfindung liegt demgegenüber die Aufgabe zugrunde, das Fahrverhalten eines Kraftfahrzeugs selbsttätig besonders genau an den Fahrstil des Fahrzeugführers anzupassen.

Erfindungsgemäß wird gemäß Anspruch 1 de Fahrstil aufgrund der Betätigung eines Fahrpedals erkannt. Weiterhin wird das Signal der Stellung des Fahrpedales zur Bildung der Vorgabe des Fahrzeuführers zumindest unter bestimmten Bedingungen einer signifikanten, im Fahrverhalten deutlich spürbaren und Sprünge im Fahrverhalten unterbindenden Tiefpaßfilterung unterzogen.

Gegenüber dem gattungsbildenden Stand der Technik erweist es sich dabei als vorteilhaft, daß die Erkennung des Fahrstils selbsttätig erfolgt, ohne daß ein Eingriff durch den Fahrzeugführer notwendig wäre. Es ist vorteilhaft, die Notwendigkeit eines solchen Eingriffs zu vermeiden, weil der Fahrzeugführer dann erst erkennen muß, was er gegebenenfalls als nicht optimal empfindet, um dann die richtige Einstellung vorzunehmen.

Durch die Tiefpaßfilterung des Signals des Fahrpedals zur Ermittlung der Stellung der Drosselklappe und/oder der Einspritzmenge können vorteilhaft Sprünge im Fahrverhalten unterbunden werden. Der Fahrkomfort steigert sich dadurch.

Bei dem Verfahren nach Anspruch 2 besteht eine der bestimmten Bedingungen darin, daß die erkannte Fahrweise unter einem bestimmten Schwellwert einer als sportlich erkannten Fahrweise liegt.

Dadurch erfolgt eine Tiefpaßfilterung nur bei einem eher ruhigen Fahrstil. Dadurch kann entsprechend dem Fahrstil des Fahrzeugführers bei einem ruhigen Fahrstil ein höherer Fahrkomfort erzielt werden und bei einem eher sportlichen Fahrstil ein dynamischeres Ansprechen des Fahrzeuges auf eine Betätigung des Fahrpedales durch den Fahrzeugführer.

Bei dem Verfahren nach Anspruch 3 besteht eine der bestimmten Bedingungen darin, daß das Fahrpedal nicht mit einer Geschwindigkeit zurückgenommen wird, die oberhalb einer bestimmten Schwelle liegt.

Dadurch wird vorteilhaft eine Anforderung einer vergleichsweise deutlichen Fahrzeugverzögerung ohne Zeitverzug umgesetzt.

Bei dem Verfahren nach Anspruch 4 werden die Parameter der Tiefpaßfilterung in Abhängigkeit von der erkannten Fahrweise eingestellt.

Dadurch kann das Verhältnis zwischen Fahrkomfort und einem dynamischen Ansprechen des Fahrzeuges auf die Betätigung des Fahrpedales durch den Fahrzeugführer noch feiner in Abhängigkeit von dem Grad der ruhigen Fahrweise bzw. einer Tendenz zu einer sportlicheren Fahrweise eingestellt werden.

Erfindungsgemäß wird weiterhin gemäß Anspruch 5 der Fahrstil erkannt aufgrund der Betätigung eines Fahrpedals, wobei als Vorgabe des Fahrzeugführers eine Größe verwendet wird, die gebildet wird, indem die Stellung des Fahrpedals berücksichtigt wird sowie zumindest unter bestimmten Verhältnissen die zeitliche Ableitung der Stellung des Fahrpedals, wobei ein Mass der Berücksichtigung der zeitlichen Ableitung der Stellung des Fahrpedals in Abhängigkeit des erkannten Fahrweise variierbar ist.

Die Erkennung des Fahrstils aufgrund der Betätigung des Fahrpedals erweist sich aus den im Zusammenhang mit Anspruch 1 genannten Gründen als vorteilhaft.

Indem weiterhin zumindest unter bestimmten Verhältnissen die zeitliche Ableitung der Stellung des Fahrpedals berücksichtigt wird, kann vorteilhaft die Dynamik der Betätigung des Fahrpedales bei der Anforderung des Fahrzeugführers berücksichtigt werden.

Bei dem Verfahren nach Anspruch 6 wird ebenfalls der Fahrstil erkannt aufgrund der Betätigung eines Fahrpedals, wobei als Vorgabe des Fahrzeugführers eine Größe verwendet wird, die gebildet wird, indem die Stellung des Fahrpedals berücksichtigt wird sowie zumindest unter bestimmten Verhältnissen die zeitliche Ableitung der Stellung des Fahrpedals.

Gegenüber Anspruch 5 ist Anspruch 6 auf die vorhergehenden Ansprüche rückbezogen. Es läßt sich damit ein System darstellen, bei dem bei einer als ruhig erkannten Fahrweise eine zusätzliche Tiefpaßfilterung des Signals der Stellung des Fahrpedals erfolgt, während bei einer als sportlich erkannten Fahrweise eine Verbesserung der Dynamik und des Ansprechens des Fahrzeugs auf eine entsprechende Anforderung des Fahrzeugführers erreichbar ist.

Bei dem Verfahren nach Anspruch 7 bestehen die bestimmten Verhältnisse darin, daß die erkannte Fahrweise oberhalb einer bestimmten Schwelle einer sportlichen Fahrweise liegt.

Dadurch kann diese Berücksichtigung der Dynamik vorteilhaft bei einer ruhigen Fahrweise unterbunden werden.

Bei dem Verfahren nach Anspruch 8 wird für die Bildung der Größe die zeitliche Ableitung der Stellung des Fahrpedals umso stärker berücksichtigt, umso mehr die Fahrweise als sportlich erkannt wird.

Dadurch wird vorteilhaft die Dynamik umso stärker berücksichtigt je sportlicher die Fahrweise ist.

Bei dem Verfahren nach Anspruch 9 existiert zu der erkannten Fahrweise zwischen der als ruhig erkannten Fahrweise und der als sportlich erkannten Fahrweise wenigstens ein Zwischenwert. Zu diesem wenigstens einen Zwischenwert existiert weiterhin eine Kennlinie, die zwischen der Kennlinie mit dem progressiven Verlauf bei der als ruhig erkannten Fahrweise liegt und der Kennlinie mit dem degressiven Verlauf bei der als sportlich erkannten Fahrweise.

Dadurch ist in wenigstens einer weiteren Stufe eine feinere Einstellung auf die Fahrweise des jeweiligen Fahrzeugführers möglich.

Bei dem Verfahren nach Anspruch 10 erfolgt die Einordnung der Fahrweisen zwischen der als ruhig erkannten Fahrweise und der als sportlich erkannten Fahrweise kontinuierlich. Die Zuordnung der Kennlinien erfolgt ebenfalls kontinuierlich.

Dadurch ist eine noch differenziertere Unterteilung der einzelnen Fahrweisen der einzelnen Fahrzeugführer und eine entsprechende Zuordnung einer Kennlinie möglich.

Bei dem Verfahren nach Anspruch 11 erfolgt eine Variation der Kennlinien in Abhängigkeit von der Fahrzeuggeschwindigkeit.

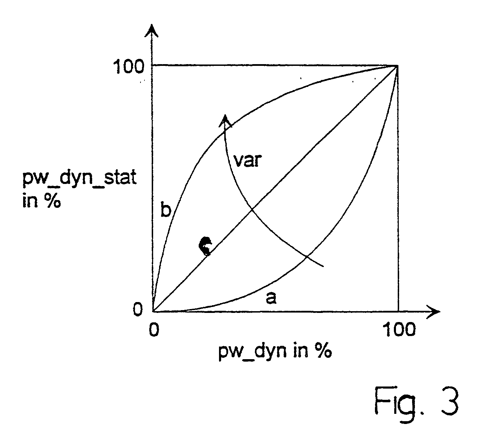

Dadurch wird vorteilhaft der Fahrwiderstand berücksichtigt. Bei ruhiger Fahrweise wird beispielsweise nur bei Geschwindigkeiten kleiner als 100 km/h die Kennlinie (a) der Figur 3 zugelassen, weil bei hohen Geschwindigkeiten der Fahrwiderstand das Fahrzeug ausreichend phlegmatisiert. Bei einer als sportlich erkannten Fahrweise wird beispielsweise bei Geschwindigkeiten größer als 100 km/h nur noch die dynamische Kennlinie (b) der Figur 3 zugelassen. In Richtung kleiner Geschwindigkeiten wird die Dynamikanhebung kontinuierlich zurückgenommen, um das Fahrzeug auch hier noch dosierbar zu machen.

Bei dem Verfahren nach Anspruch 12 erfolgt bei einer erkannten spontanen Dynamikanforderung des Fahrzeugführers unabhängig von der bisher erkannten Fahrweise die Einstellung der Drosselklappe bzw. Einspritzmenge unabhängig von der bisher aufgrund der erkannten Fahrweise verwendeten Kennlinie in Abhängigkeit von der spontanen Dynamikanforderung.

Dies wirkt sich insbesondere bei einer ruhigen Fahrweise vorteilhaft aus. Wegen des Verlaufes der Kennlinie müßte nämlich der Fahrzeugführer das Fahrpedal entsprechend weit betätigen bis er aufgrund des Verlaufes der Kennlinie eine entsprechende Stellung der Drosselklappe bzw. Einspritzmenge erzielt. Bei einer erwünschten Fahrzeugbeschleunigung kann dies zu einer zeitlichen Verzögerung führen. Vorteilhaft wird dies durch die Erkennung einer spontanen Dynamikanforderung unterbunden. Die Erkennung der spontanen Dynamikanforderung kann beispielsweise durch ein Verfahren erfolgen, das von der Anmelderin in der Patentanmeldung mit demselben Prioritätstag und dem amtlichen Aktenzeichen P 197 29 251.8 des Deutschen Patent- und Markenamts beschrieben worden ist.

Bei dem Verfahren nach Anspruch 13 wird bei einer erkannten spontanen Dynamikanforderung als Kennlinie die Kennlinie einer mittleren Fahrweise (beispielsweise Kennlinie (c) der Figur 3) verwendet.

Dadurch kann entsprechend schneller eine entsprechend große Fahrzeugbeschleunigung eingestellt werden.

Ein Ausführungsbeispiel der Erfindung ist in der Zeichnung näher dargestellt. Es zeigt dabei im einzelnen:

Fig. 1: ein Ausführungsbeispiel in Form eines Blockdiagrammes zur Berücksichtigung einer dynamischen Variation der Zuordnung der Fahrpedalstellung zur Stellung der Drosselklappe bzw. zur Einspritzmenge,

Fig. 2: ein Ausführungsbeispiel in Form eines Blockdiagrammes zur Berücksichtigung einer statischen Variation der Zuordnung der Fahrpedalstellung zur Stellung der Drosselklappe bzw. zur Einspritzmenge und

Fig. 3: eine Kennlinienschar zur Durchführung der statischen Variation der Zuordnung der Fahrpedalstellung zur Stellung der Drosselklappe bzw. zur Einspritzmenge.

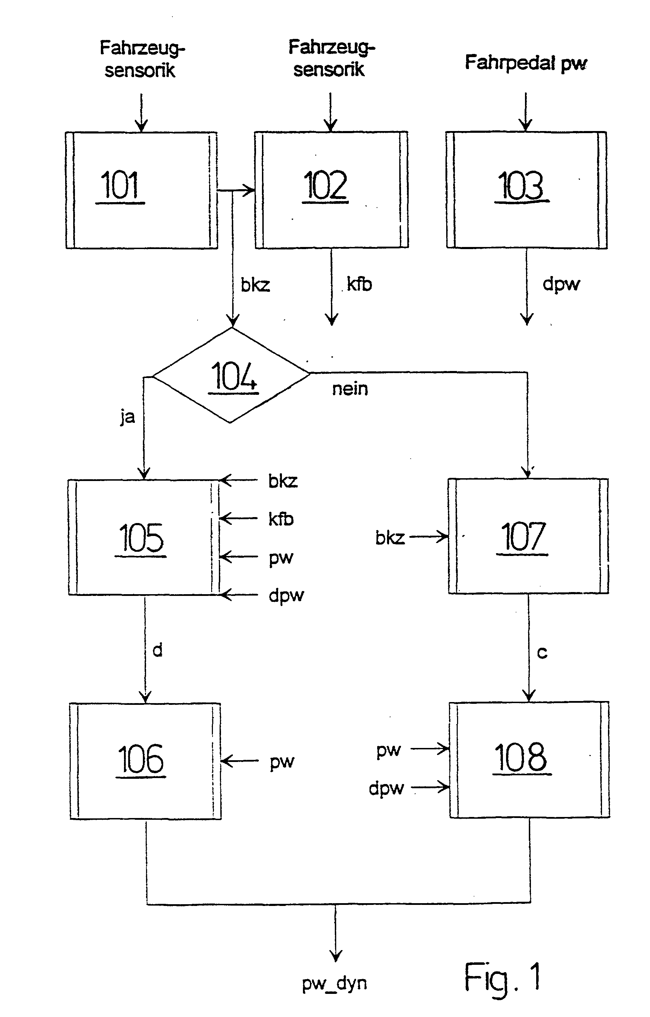

Figur 1 zeigt ein Blockdiagramm, mit dem eine Berücksichtigung einer dynamischen Variation der Zuordnung der Fahrpedalstellung zur Stellung der Drosselklappe bzw. zur Einspritzmenge erfolgt. In dem Block 101 wird zunächst der individuelle Fahrstil des Fahrzeugführers ermittelt. Es erfolgt also in diesem Block eine Erkennung der Fahrweise. Dies kann beispielsweise nach dem in der DE 44 01 416 A1 beschriebenen Verfahren erfolgen, wobei für den hier vorliegenden Fall vorteilhaft die Kennziffer der Längsbeschleunigung bkz des dort beschriebenen Verfahrens verwendet wird. Es ist aber grundsätzlich möglich, auch andere Verfahren zur Einstufung der Fahrweise zwischen ruhig und sportlich vorzusehen.

Weiterhin ist zu sehen, daß in dem Block 102 eine Auswertung erfolgt, mit der eine spontane Dynamikanforderung des Fahrzeugführers erkannt werden soll. Dies kann beispielsweise nach dem Verfahren erfolgen, das in der mit demselben Anmeldetag eingereichten Patentanmeldung mit dem internen Aktenzeichen 28825 der Anmelderin beschrieben ist. Zur Erkennung eines spontanen Dynamikanforderung wird in dieser Schrift eine Größe kfb bestimmt. Der Block 2 ist also eine verkürzte Darstellung des in der genannten Patentanmeldung beschriebenen Verfahrens. Wenn eine spontane Dynamikanforderung erkannt wurde, wird die Zuordnung der Vorgabe des Fahrzeugführers durch die Stellung des Fahrpedales unabhängig von der bisher erkannten Fahrweise entsprechend der spontanen Dynamikanforderung eingestellt.

In dem Block 103 wird aus der Stellung des Fahrpedales pw die zeitliche Änderung dpw der Stellung des Fahrpedales gebildet.

In dem Block 104 wird die erkannte Fahrweise mit einem vorgegebenen Schwellwert verglichen. In dem gezeigten Ausführungsbeispiel wird die Größe bkz zur Erkennung der Fahrweise verwendet, so daß dann in dem Block 104 auch ein Vergleich dieser Größe bkz mit einem vorgegebenen Schwellwert dieser Größe bkz erfolgt.

Ist dabei die Größe bkz kleiner als der Schwellwert, so erfolgt ein Übergang zu dem Block 105. Das Signal, das die Stellung des Fahrpedales repräsentiert, wird dabei gedämpft. Vorteilhaft kann diese Dämpfung d - wie in dem Block 105 gezeigt - durch verschiedene andere Größen beeinflußt werden. Beispielsweise kann die Dämpfung d in Abhängigkeit von der als eher ruhig bzw. eher sportlich erkannten Fahrweise gedämpft werden. Ebenso ist es möglich, die Dämpfung d in Abhängigkeit von der Größe kfb festzulegen, anhand der eine spontane Dynamikanforderung erkannt wird. Ebenso kann die Dämpfung d in Abhängigkeit von der Stellung des Fahrpedales pw und/oder von der zeitlichen Ableitung der Stellung des Fahrpedales dpw festgelegt werden.

Es erfolgt dann ein Übergang zu dem Block 106, in dem die Dämpfung des Fahrpedalsignales durchgeführt wird. Zur weiteren Einstellung der Drosselklappe bzw. der Einspritzmenge wird dann das pw_dyn verwendet.

Ziel der Dämpfung in den Blöcken 105 und 106 ist es, eine umso stärkere Dämpfung einzustellen, je ruhiger die Fahrweise des Fahrzeugführers ist. Falls eine schnelle Pedalrücknahme oder eine Pedalnullstellung erfolgt, wird die Dämpfung sofort ausgeschaltet, um die gewünschte Verzögerung des Fahrzeuges ohne zeitlichen Verzug einzuleiten.

Wurde in dem Block 104 festgestellt, daß die Größe bkz größer ist als der Schwellwert der Größe bkz, so wird die Größe pw_dyn gebildet, indem zu der Stellung des Fahrpedales pw die zeitliche Ableitung der Stellung des Fahrpedales dpw multipliziert mit einer Größe c addiert wird.

Diese Größe c kann beispielsweise in dem Block 107 in Abhängigkeit der erkannten Fahrweise variiert werden. Mit einer zunehmenden sportlichen Fahrweise wird diese Größe größer, so daß sich ein schnelleres Ansprechen des Fahrzeuges auf eine Änderung der Fahrpedalstellung in Richtung einer Beschleunigung ergibt.

In dem Block 108 wird dann die Größe pw_dyn bestimmt durch Addition der Stellung des Fahrpedales und der zeitlichen Änderung der Stellung des Fahrpedales multipliziert mit der Größe c:

$$pw\_dyn = pw + c * dpw.$$

Es liegt dabei selbstverständlich im Rahmen der Erfindung, ohne die Überprüfung in dem Block 104 die Parameter so an die erkannte Fahrweise anzupassen, daß kontinuierlich die Dämpfung bei zunehmender sportlicher Fahrweise gegen 0 geht und die Größe c bei zunehmender ruhiger Fahrweise gegen 0 geht.

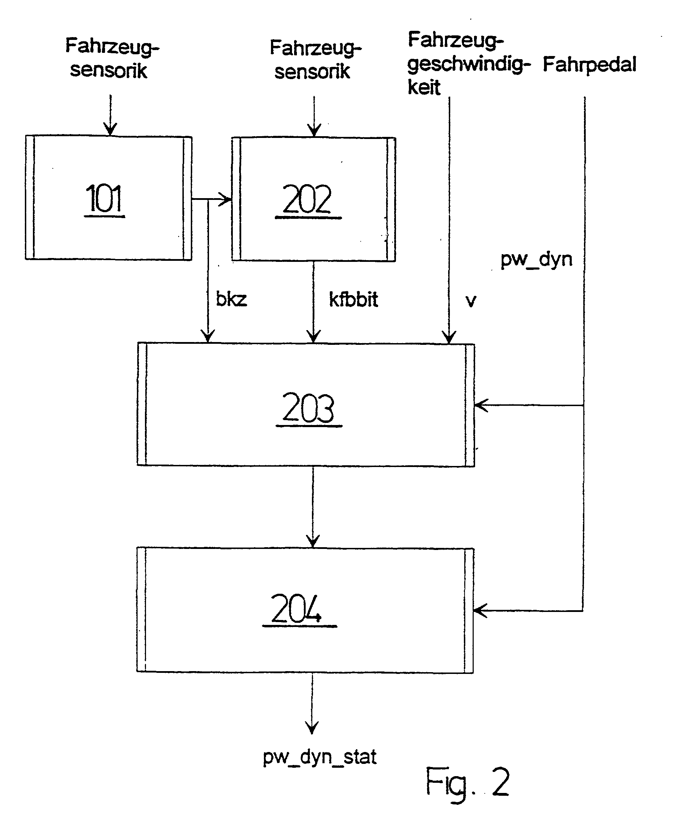

Figur 2 zeigt ein Ausführungsbeispiel eines Blockdiagrammes zur Berücksichtigung einer statischen Variation der Zuordnung der Fahrpedalstellung zur Stellung der Drosselklappe bzw. zur Einspritzmenge.

Der Block 101 entspricht dem Block 101 der Figur 1. Auch hier wird die Fahrweise ausgewertet und entsprechend als eher ruhig oder eher sportlich erkannt. Auch in dem Ausführungsbeispiel der Figur 2 wird die Beschleunigungskennziffer bkz zur weiteren Auswertung verwendet.

In dem Block 202 wird die spontane Dynamikanforderung erkannt entsprechend der Patentanmeldung mit demselben Anmeldetag, die das interne Aktenzeichen 28825 der Anmelderin trägt. Die Größe kfbbit charakterisiert dabei, ob eine spontane Dynamikanforderung vorliegt oder nicht.

Weiterhin wird dem Block 203 ein die Fahrzeuggeschwindigkeit v repräsentierendes Signal zugeführt. sowie das die Vorgabe des Fahrzeugführers repräsentierende Signal der Stellung des Fahrpedales, das wie in Figur 1 gezeigt ermittelt wurde als Größe pw_dyn.

Wenn eine spontane Dynamikanforderung vorliegt (kfbbit gesetzt), so wird beispielsweise ohne weitere Berücksichtigung der bisher erkannten Fahrweise mindestens die mittlere Kennlinie (c) verwendet, um ein entsprechend dynamisches Ansprechen des Fahrzeuges zu gewährleisten.

Wenn das Bit kfbbit nicht gesetzt worden ist, kann anhand der erkannten Fahrweise eine Kennlinie ausgewertet werden. In Figur 3 sind beispielhaft einige Kennlinien gezeigt, die nachfolgend noch erläutert werden.

Weiterhin kann die Kennlinie entsprechend der Fahrzeuggeschwindigkeit variiert werden, wodurch der Fahrwiderstand berücksichtigt werden kann. Beispielsweise kann bei einer ruhigen Fahrweise nur bei Geschwindigkeiten kleiner als 100 km/h die Kennlinie (a) der Figur 3 zugelassen werden, weil bei hohen Geschwindigkeiten der Fahrwiderstand das Fahrzeug ausreichend phlegmatisiert. Bei einer als sportlich erkannten Fahrweise wird beispielsweise bei Geschwindigkeiten größer als 100 km/h nur noch die dynamische Kennlinie (b) der Figur 3 zugelassen. In Richtung kleiner Geschwindigkeiten wird die Dynamikanhebung kontinuierlich zurückgenommen, um das Fahrzeug auch hier noch dosierbar zu machen.

In dem Schritt 204 wird anhand der ermittelten Größe pw_dyn und der Kennlinie die Einstellung der Drosselklappe bzw. der Einspritzmenge vorgenommen.

Figur 3 zeigt eine Kennlinienschar zur Durchführung der statischen Variation der Zuordnung der Fahrpedalstellung zur Stellung der Drosselklappe bzw. zur Einspritzmenge.

Entsprechend dem in dem Schritt 203 ermittelten Grad var der Variation der Kennlinie mit der als ruhig oder sportlich erkannten Fahrweise erfolgt die Auswahl der Kennlinien. Die Richtung des Pfeiles der Größe var zeigt die Auswahl der Kennlinie bei einer als zunehmend sportlich erkannten Fahrweise an.

Die Kennlinie a entspricht einer ruhigen Fahrweise, die Kennlinie b einer sportlichen Fahrweise und die Kennlinie c eine mittleren Fahrweise.

In der Figur 3 ist die Größe pw_dyn_stat über der Größe pw_dyn aufgetragen. Beispielsweise kann die Stellung der Drosselklappe bzw. die Einspritzmenge direkt proportional zur Größe pw_dyn_stat sein (Kennlinie c)

Es zeigt sich also vorteilhaft, daß eine besonders gute Berücksichtung der erkannten Fahrweise möglich ist, wenn sowohl die Zuordnung der Stellung der Drosselklappe bzw. der Einspritzmenge zur Stellung des Fahrpedales in Abhängigkeit von der erkannten Fahrweise vorgenommen wird als auch eine Zuordnung der Stellung der Drosselklappe bzw. der Einspritzmenge zur zeitlichen Änderung der Stellung des Fahrpedales in Abhängigkeit von der erkannten Fahrweise vorgenommen wird.

**Patentansprüche**

1. Verfahren zur Einstellung der Drosselklappe und/ oder Einspritzmenge einer Brennkraftmaschine eines Kraftfahrzeuges abhängig von der Vorgabe eines Fahrzeugführers, wobei eine Anpassung der Einstellung an den erkannten Fahrstil des Fahrzeugführers erfolgt, wobei die Kennlinie der Winkelstellung der Drosselklappe bzw. Einspritzmenge über der Vorgabe des Fahrzeugführers bei einer als ruhig erkannten Fahrweise einen progressiven Verlauf aufweist (a) und bei einer als sportlich erkannten Fahrweise einen degressiven Verlauf (b) (203, 204), wobei als Vorgabe des Fahrzeugführers die Winkel Stellung des Fahrpedals verwendet wird, **dadurch gekennzeichnet, daß** der Fahrstil aufgrund der Betätigung eines Fahrpedals erkannt wird und daß das Signal dieser Stellung des Fahrpedales zur Bildung der Vorgabe des Fahrzeugführers zumindest unter bestimmten Bedingungen einer signifikanten im Fahrverhalten deutlich spürbaren und Sprünge im Fahrverhalten unterbindenden Tiefpaßfilterung unterzogen wird (105).

2. Verfahren nach Anspruch 1,
**dadurch gekennzeichnet, daß** eine der bestimmten Bedingungen darin besteht, daß die erkannte Fahrweise unter einem bestimmten Schwellwert einer als sportlich erkannten Fahrweise liegt (104).

3. Verfahren nach Anspruch 1 oder 2,
**dadurch gekennzeichnet, daß** eine der bestimmten Bedingungen darin besteht, daß das Fahrpedal nicht mit einer Geschwindigkeit zurückgenommen wird, die oberhalb einer bestimmten Schwelle liegt.

4. Verfahren nach einem der Ansprüche 1 bis 3,
**dadurch gekennzeichnet, daß** die Parameter der Tiefpaßfilterung in Abhängigkeit von der erkannten Fahrweise (bkz) eingestellt werden (105).

5. Verfahren zur Einstellung der Drosselklappe und/oder Einspritzmenge einer Brennkraftmaschine eines Kraftfahrzeuges abhängig von der Vorgabe eines Fahrzeugführers, wobei eine Anpassung der Einstellung an den erkannten Fahrstil des Fahrzeugführers erfolgt, wobei die Kennlinie der Winkelstellung der Drosselklappe bzw. Einspritzmenge über der Winkelstellung des Fahrpedals bei einer als ruhig erkannten Fahrweise einen progressiven Verlauf aufweist (a) und bei einer als sportlich erkannten Fahrweise einen degressiven Verlauf (b) (203, 204),
**dadurch gekennzeichnet, daß** der Fahrstil erkannt wird aufgrund der Betätigung eines Fahrpedals, wobei als Vorgabe des Fahrzeugführers eine Größe verwendet wird, die gebildet wird, indem die Stellung des Fahrpedals berücksichtigt wird sowie zumindest unter bestimmten Verhältnissen die zeitliche Ableitung der Stellung des Fahrpedals (107, 108), wobei ein Mass (c) der Berücksichtigung der zeitlichen Ableitung der Stellung des Fahrpedals in Abhängigkeit der erkannten Fahrweise variierbar ist.

6. Verfahren nach einem der Ansprüche 1 bis 4,
**dadurch gekennzeichnet, daß**
als Vorgabe des Fahrzeugführers eine Größe verwendet wird, die gebildet wird, indem die Stellung des Fahrpedals berücksichtigt wird sowie zumindest unter bestimmten Verhältnissen die zeitliche Ableitung der Stellung des Fahrpedals (107, 108), wobei ein Mass (c) der Berücksichtigung der zeitlichen Ableitung der Stellung des Fahrpedals in Abhängigkeit der erkannten Fahrweise variierbar ist.

7. Verfahren nach einem der Ansprüche 5 oder 6,
**dadurch gekennzeichnet, daß** die bestimmten Verhältnisse darin bestehen, daß die erkannte Fahrweise oberhalb einer bestimmten Schwelle einer sportlichen Fahrweise liegt (104).

8. Verfahren nach einem der Ansprüche 5 bis 7,
**dadurch gekennzeichnet, daß** für die Bildung der Größe die zeitliche Ableitung der Stellung des Fahrpedals umso stärker berücksichtigt wird, umso mehr die Fahrweise als sportlich erkannt wird (107).

9. Verfahren nach einem der Ansprüche 1 bis 8,
**dadurch gekennzeichnet, daß** zu der erkannten Fahrweise zwischen der als ruhig erkannten Fahrweise und der als sportliche erkannten Fahrweise wenigstens ein Zwischenwert existiert und daß zu diesem wenigstens einen Zwischenwert eine Kennlinie existiert, die zwischen der Kennlinie mit dem progressiven Verlauf (a) bei der als ruhig erkannten Fahrweise liegt und der Kennlinie mit dem degressiven Verlauf (b) bei der als sportlich erkannten Fahrweise (var) (203, 204).

10. Verfahren nach Anspruch 9,
**dadurch gekennzeichnet, daß** die Einordnung der Fahrweisen zwischen der als ruhig erkannten Fahrweise und der als sportlich erkannten Fahrweise kontinuierlich erfolgt (var) (203) und daß die Zuordnung der Kennlinien ebenfalls kontinuierlich erfolgt (204).

11. Verfahren nach einem der Ansprüche 1 bis 10,
**dadurch gekennzeichnet, daß** eine Variation der Kennlinien in Abhängigkeit von der Fahrzeuggeschwindigkeit (v) erfolgt (203).

12. Verfahren nach einem der Ansprüche 1 bis 11,
**dadurch gekennzeichnet, daß** bei einer erkannten spontanen Dynamikanforderung des Fahrzeugführers unabhängig von der bisher erkannten Fahrweise die Einstellung der Drosselklappe bzw. Einspritzmenge unabhängig von der bisher aufgrund der erkannten Fahrweise verwendeten Kennlinie in Abhängigkeit von der spontanen Dynamikanforderung erfolgt (202).

13. Verfahren nach Anspruch 12,
**dadurch gekennzeichnet, daß** bei einer erkannten spontanen Dynamikanforderung (202) als Kennlinie die Kennlinie einer mittleren Fahrweise (c) verwendet wird.

**Claims**

1. Method for adjusting the throttle valve and/or injection quantity of an internal-combustion engine of a motor vehicle as a function of the input of a vehicle driver,
wherein adaptation of the adjustment to the known driving style of the vehicle driver takes place, wherein the characteristic curve of the angular position of the throttle valve or injection quantity via the input of the vehicle driver has a progressive course (a) in a driving style known as calm and a degressive course (b) (203, 204) in a driving style known as sporty, wherein the angular position of the accelerator pedal is used as the input of the vehicle driver, **characterised in that** the driving style is known on the basis of the actuation of an accelerator pedal and **in that** the signal for this position of the accelerator pedal is subjected to significant low-pass filtering, at least under certain conditions, which can be clearly felt in the driving behaviour and prevent jumps in the driving behaviour, to form the input of the vehicle driver (105).

2. Method according to claim 1, **characterised in that** one of the specific conditions consists **in that** the known driving style is below a specific threshold of a driving style known as sporty (104).

3. Method according to claim 1 or 2, **characterised in that** one of the specific conditions consists **in that** the accelerator pedal is not retracted at a speed which is above a specific threshold.

4. Method according to any one of claims 1 to 3, **characterised in that** the parameters of the low-pass filtering are adjusted as a function of the known driving style (bkz) (105).

5. Method for adjusting the throttle valve and/or injection quantity of an internal-combustion engine of a motor vehicle as a function of the input of a vehicle driver, wherein adaptation of the adjustment to the known driving style of the vehicle driver takes place, wherein the characteristic curve of the angular position of the throttle valve or injection quantity via the angular position of the accelerator pedal has a progressive course (a) in a driving style known as calm and has a degressive course (b) (203, 204) in a driving style known as sporty, **characterised in that** the driving style is detected on the basis of the actuation of an accelerator pedal, wherein a variable is used as the input of the vehicle driver, which is formed **in that** the position of the accelerator pedal is taken into account as well as, at least under certain circumstances, the time derivative of the position of the accelerator pedal (107, 108), wherein a measure (c) of the consideration of the time derivative of the position of the accelerator pedal can be varied as a function of the known driving style.

6. Method according to any one of claims 1 to 4, **characterised in that** a variable is used as the input of the vehicle driver, which is formed **in that** the position of the accelerator pedal is taken into account as well as, at least under certain circumstances, the time derivative of the position of the accelerator pedal (107, 108), wherein a measure (c) of the consideration of the time derivative of the position of the accelerator pedal can be varied as a function of the known driving style.

7. Method according to either of claims 5 or 6, **characterised in that** the certain circumstances consist **in that** the known driving style is above a specific threshold of a sporty driving style (104).

8. Method according to any one of claims 5 to 7, **characterised in that**, to form the variable, the time derivative of the position of the accelerator pedal is taken into account all the more strongly, the more the driving style is recognised as sporty (107).

9. Method according to any one of claims 1 to 8, **characterised in that**, with respect to the known driving style, at least one intermediate value exists between the driving style known as calm and the driving style known as sporty and **in that** a characteristic curve exists with respect to this at least one intermediate value, which lies between the characteristic curve with the progressive course (a) in the driving style known as calm and the characteristic curve with the degressive course (b) in the driving style (var) (203, 204) known as sporty.

10. Method according to claim 9, **characterised in that** the classification of the driving styles between the driving style known as calm and the driving style known as sporty takes place continuously (var) (203) and **in that** the allocation of the characteristic curves also takes place continuously (204).

11. Method according to any one of claims 1 to 10, **characterised in that** the characteristic curves are varied as a function of the vehicle speed (v) (203).

12. Method according to any one of claims 1 to 11, **characterised in that**, in the case of a known spontaneous dynamic request from the vehicle driver regardless of the previously known driving style, the throttle valve or injection quantity are adjusted regardless of the previously used characteristic curve on the basis of the known driving style, as a function of the spontaneous dynamic request (202).

13. Method according to claim 12, **characterised in**

**that** in the case of a known spontaneous dynamic request (202), the characteristic curve of an average driving style (c) is used as the characteristic curve.

## Revendications

1. Procédé de réglage du clapet d'étranglement et/ou du débit d'injection d'un moteur thermique d'un véhicule automobile, en fonction de la consigne d'un conducteur, dans lequel s'effectue une adaptation du réglage au style de conduite reconnu du conducteur du véhicule, la courbe caractéristique de la position angulaire du clapet d'étranglement ou du débit d'injection reportée sur la consigne du conducteur présente une évolution progressive (a) dans le cas d'un mode de conduite reconnu comme calme et une évolution dégressive (b) dans le cas d'un mode de conduite reconnu comme sportif (203, 204), en utilisant à titre de consigne du conducteur la position angulaire de la pédale d'accélérateur, **caractérisé en ce que** le style de conduite est connu suite à l'actionnement d'une pédale d'accélérateur et **en ce que** pour former la consigne du conducteur, le signal de cette position de la pédale d'accélérateur est soumis (105), au moins dans des conditions déterminées, à un filtrage significatif par un filtre passe-bas, qui est perceptible de façon nette dans le comportement de conduite et qui supprime des à-coups dans le comportement de conduite.

2. Procédé selon la revendication 1, **caractérisé en ce que** l'une des conditions déterminées consiste **en ce que** le mode de conduite reconnu se trouve au-dessous d'une valeur seuil déterminée d'un mode de conduite reconnu comme sportif (104).

3. Procédé selon l'une ou l'autre des revendications 1 et 2, **caractérisé en ce que** l'une des conditions déterminées consiste **en ce que** la pédale d'accélérateur n'est pas relâchée à une vitesse qui est supérieure à un seuil déterminé.

4. Procédé selon l'une des revendications 1 à 3, **caractérisé en ce que** les paramètres du filtrage passe-bas sont réglés (105) en fonction du mode de conduite reconnu (bkz).

5. Procédé de réglage du clapet d'étranglement et/ou du débit d'injection d'un moteur thermique d'un véhicule automobile, en fonction de la consigne d'un conducteur, dans lequel s'effectue une adaptation du réglage au style de conduite reconnu du conducteur du véhicule, la courbe caractéristique de la position angulaire du clapet d'étranglement ou du débit d'injection reportée sur la position angulaire de la pédale d'accélérateur présente une évolution progressive (a) dans le cas d'un mode de conduite reconnu comme calme et une évolution dégressive (b) dans le cas d'un mode de conduite reconnu comme sportif (203, 204), **caractérisé en ce que** le style de conduite est reconnu suite à l'actionnement d'une pédale d'accélérateur, en utilisant à titre de consigne du conducteur une grandeur qui est formée en prenant en compte la position de la pédale d'accélérateur ainsi qu'au moins dans des conditions déterminées la dérivée temporelle de la position de la pédale d'accélérateur (107, 108), un indice (c) de la prise en compte de la dérivée temporelle de la position de la pédale d'accélérateur étant variable en fonction du mode de conduite reconnu.

6. Procédé selon l'une des revendications 1 à 4, **caractérisé en ce que** l'on utilise à titre de consigne du conducteur une grandeur qui est formée en prenant en compte la position de la pédale d'accélérateur ainsi qu'au moins dans des conditions déterminées la dérivée temporelle de la position de la pédale d'accélérateur (107, 108), un indice (c) de la prise en compte de la dérivée temporelle de la position de la pédale d'accélérateur étant variable en fonction du mode de conduite reconnu.

7. Procédé selon l'une ou l'autre des revendications 5 et 6, **caractérisé en ce que** les conditions déterminées consistent **en ce que** le mode de conduite reconnu se trouve au-dessus d'une valeur seuil déterminée d'un mode de conduite reconnu comme sportif (104).

8. Procédé selon l'une des revendications 5 à 7, **caractérisé en ce que** pour la formation de la grandeur, on prend en compte la dérivée temporelle de la position de la pédale d'accélérateur, et ceci d'autant plus que le mode de conduite est reconnu comme sportif (107).

9. Procédé selon l'une des revendications 1 à 8, **caractérisé en ce qu'**il existe au moins une valeur intermédiaire par rapport au mode de conduite reconnu entre le mode de conduite reconnu comme calme et le mode de conduite reconnu comme sportif, et **en ce qu'**il existe au moins une courbe caractéristique par rapport à ladite au moins une valeur intermédiaire, qui se trouve entre la courbe caractéristique présentant l'évolution progressive (a) lors du mode de conduite reconnu comme calme et la courbe caractéristique présentant l'évolution dégressive (b) lors du mode de conduite reconnu comme sportif (var) (203, 204).

10. Procédé selon la revendication 9, **caractérisé en ce que** le classement des modes de conduite entre le mode de conduite reconnu comme calme et le mode de conduite reconnu comme sportif s'effectue en continu (var) (203) et **en ce que** l'association des courbes caractéristiques s'effectue également en continu (204).

11. Procédé selon l'une des revendications 1 à 10, **caractérisé en ce qu'**il s'effectue une variation des courbes caractéristiques en fonction de la vitesse (v) du véhicule (203).

12. Procédé selon l'une des revendications 1 à 11, **caractérisé en ce que** lors d'une demande dynamique spontanée reconnue du conducteur du véhicule indépendamment du mode de conduite reconnu jusqu'alors, le réglage du clapet d'étranglement ou du débit d'injection s'effectue indépendamment de la courbe caractéristique, utilisée jusqu'alors en raison du mode de conduite reconnu, en fonction de la demande dynamique spontanée (202).

13. Procédé selon la revendication 12, **caractérisé en ce que** lors d'une demande dynamique spontanée reconnue (202), on utilise à titre de courbe caractéristique la courbe caractéristique d'un mode de conduite moyen (c).

Fig. 1

Fahrzeugsensorik

Fahrzeugsensorik

Fahrzeuggeschwindigkeit

Fahrpedal

101

202

pw_dyn

bkz

kfbbit

v

203

204

pw_dyn_stat

Fig. 2

11

Fig. 3